(19) Europäisches Patentamt
European Patent Office
Office européen des brevets

(11) Publication number: 0 235 439 A1

(12) # EUROPEAN PATENT APPLICATION

(21) Application number: 86307859.8

(22) Date of filing: 10.10.86

(51) Int. Cl.⁴: H 01 B 1/24, H 01 C 7/02, B 29 B 7/42

(30) Priority: 12.10.85 GB 8525273

(43) Date of publication of application: 09.09.87 Bulletin 87/37

(84) Designated Contracting States: BE CH DE ES FR GB IT LI NL SE

(71) Applicant: RAPRA TECHNOLOGY LIMITED, Shawbury, Shrewsbury Shropshire SY4 4NR (GB)
Applicant: UNION CARBIDE EUROPE S.A., 21 Avenue Choiseul, CH-1290 Versoix Geneve (CH)

(72) Inventor: Gale, George Martin, Westwinds§Lyth Bank§Shrewsbury, Shropshire SY3 0BE (GB)
Inventor: James, David Ivan Hutchins, Forncet Soulton Road, Wem Shropshire SY4 5HR (GB)

(74) Representative: Gore, Peter Manson et al, W.P. THOMPSON & CO. Coopers Building Church Street, Liverpool L1 3AB (GB)

(54) **Electrically conductive polymers and their production.**

(57) The present invention provides a polymeric composition which comprises one or more polymers crosslinked by the use of sufficient hydrolyzable olefinically unsaturated silane to render said composition dimensionally and electrically heat stable, said composition containing a sufficient proportion of a conductive black to impart to it electrically conductive properties. It also provides a process for producing an electrically conductive polymeric material by use of an extruder or other machine having a forwarding screw and a barrel in which the screw is positioned and rotated to advance the mixture through the barrel.

EP 0 235 439 A1

ELECTRICALLY CONDUCTIVE POLYMERS AND THEIR PRODUCTION

The present invention relates to electrically conductive polymeric compositions and their production. More particularly it relates to stable and reproducible antistatic and electrically conductive polymers, preferably having a PTC characteristic, and their production, by a chemically induced cross-linking process.

It is known that some polymeric materials, for example polyethylene, which have insulating properties, may be made conductive by the addition of suitable amounts of carbon black. Such materials, according to their properties, are then referred to as antistatic or conductive polymers.

Some conductive polymers, particularly polyethylene, have the property that, as temperature increases, the resistivity increases slowly until a certain critical temperature range at which resistivity increases rapidly, perhaps by several orders of magnitude. This positive temperature coefficient of resistance is generally referred to as the PTC effect.

Possible applications of such an effect include:-

(a) ensuring the maintenance of a steady temperature, for example in pipe wrapping or electric blankets,

(b) temperature sensitive resistors, for example, in electronically operated car chokes, and

(c) elements in articles, for example coffee percolators,

so that electric current is reduced when the desired temperature is reached.

However it has been found that further heating may produce a fall in resistance (generally referred to as the NTC effect). For example if the polymer is subjected to prolonged heating or thermal cycling a change in electrical properties may result and the reproducibility of the heating/cooling curve may be poor. This effect could result in a potentially dangerous product. This problem of an NTC effect occurring can be overcome by cross-linking the polymer so that the crystallinity of the polymer is substantially locked in place. Various processes are known for so cross-linking polyolefines themselves, including the use of radiation or peroxides.

Radiation can however only be used for products having a thin cross section. Also the equipment required for its use is very expensive to install and may be potentially hazardous.

For articles having a thicker cross-section, chemical crosslinking using peroxides became the preferred method. Whilst steam curing at about 210°C was used to reduce porosity problems, it became preferable to apply heat and pressure to the extrudate as it left the die. However, control was still difficult and the method involved much waste, as well

as being unsuitable for articles of thin cross-sections. Furthermore when conductive polyolefins were being made, excess peroxide was always present and caused oxidative effects which in turn resulted in changes in electrical resistivity and stability.

US-A-3646155 describes a two-stage process (referred to as the "Sioplas" process) for crosslinking polyethylene. In the first stage thereof a vinyl silane is grafted on to polyethylene using a peroxide to generate free radical sites and a second compound containing a tin catalyst is included. The materials are then granulated and blended followed by extrusion. The extrudate is then exposed to moisture in a second stage of the process, wherein the tin compound catalyses the crosslinking reaction of the silane. Whilst such a process resulted in improved output of crosslinked polyethylene, it was not directed to material containing carbon black.

In a later Specification, namely GB-A-1581041, there is described a single stage process (referred to as the "Monosil" process). However it has been found that while such a process offers considerable advantages over the two-stage process, difficulties can still arise because of gel formation in regions wherein mixing is unsatisfactory. The process of GB-A-1581041 requires a very special (and therefore expensive) extruder having an extra long barrel with mixing and grafting stages controlled by screw design

and temperature control. The mixing and grafting process, with accompanying increasing melt viscosity will be slow so that (1) variable electrical resistance will occur and (2) the free radicals produced by the small amount of peroxide (necessary for grafting sites for the silane) will be absorbed by the carbon black.

It has now been found possible to provide a polymeric composition having electrically conductive properties and which is dimensionally and electrically heat stable, utilizing silane crosslinking agents.

According to the present invention there is provided a polymeric composition which comprises one or more polymers crosslinked by the use of sufficient hydrolyzable olefinically unsaturated silane to render said composition dimensionally and electrically heat stable, said composition containing a sufficient proportion of a conductive black to impart to it electrically conductive properties.

The present invention also provides a process for producing an electrically conductive polymeric material which comprises:

(a) forming a mixture of conductive black with a thermoplastic polymer or polymer blend where one or more polymers is capable of being cross-linked by a hydrolyzable olefinically unsaturated silane;

(b) feeding this mixture, or a mixture of preblended materials, into the feed zone of an

extruder or other machine having a forwarding screw and a barrel in which the screw is positioned and rotated to advance the mixture through the barrel;

(c) compacting and melting the polymers in the barrel to form a melt;

(d) injecting grafting ingredients, comprising a hydrolyzable olefinically unsaturated silane and a free-radical generator, into the melt, preferably immediately prior to the region of very distributive mixing action,

(e) subjecting the melt and grafting ingredients to a very rapid distributive mixing action, grafting the hydrolyzable silane to the polymer and shaping by means of a die; and

(f) subjecting the product of step (e) to the action of $H_2O$ in the presence of a silanol condensation catalyst until the polymer is crosslinked.

It has been found that the difficulties of the prior art may be overcome and one can obtain a product with enhanced PTC properties by the use of a silane cross-linking agent and also mixing the ingredients in a manner so that rapid incorporation occurs.

A rapid distributive action can be achieved by use of a mixer as described for example in GB-A-787764, GB-A-930339 or GB-A-1475216.

However it is highly desirable to use a cavity transfer mixer to achieve the rapid mixing, particularly a Rapra Cavity transfer mixer (hereinafter referred to as a Rapra CTM). Such use enables total dispersive

mixing of the carbon black or other conductive black and polymer, so that a blend with a known and dependable electrical resistance is obtained. By using direct silane injection into the CTM fitted to the product extruder and by using the extruder-CTM simultaneously to compound polymer mixtures, the variability of the final resistance is minimised. Further, the need to use low extrusion temperatures to improve dispersion is eliminated.

The use of the process of the present invention also overcomes three problems associated with peroxide cross-linked polymers:

(i) Variable resistance within the composition,

(ii) Variable electrical contact between the composition and any metal electrodes,

(iii) The need to anneal prior to curing to provide an initially stable resistance value which with peroxide systems may result in pre-cure before completion of annealing.

Thus the present invention provides an improved method of producing electrically conductive polymeric materials which may be consistently manufactured to a specified resistivity level and are dimensionally and electrically heat stable.

The present invention is not restricted to the form or geometry of the product as contrasted with radiation crosslinking or peroxide crosslinking.

The minimum of mixing and preprocessing in the present invention enables products to be manufactured to within closely specified resistivity limits. Electrical resistance increases with mixing history. In comparison with a two step process, the process of the present invention does not have the problems associated with any moisture adsorption by the carbon black or other conductive black between stages.

Precise control and distribution of the crosslinking agents by the use of the present invention minimises oxidative degradation with consequential changes in resistivity and contact resistance. This is not at all obvious as it had previously been assumed that the presence of peroxides would automatically lead to degradative breakdown.

In current practice PTC materials need to be annealed at high temperature preferably before crosslinking. This annealing cannot be done with peroxide crosslinking but is possible using the process of the present invention which depends on moisture rather than heat to produce the final degree of crosslinking.

Excess peroxide found in traditionally cured peroxide crosslinked materials causes a disastrous increase in contact resistance which does not happen in material produced in accordance with the present invention since (a) the peroxide is precisely distributed and is entirely used and (b) the silanes

used bring about chemical bonding between metal electrodes (when present) and the conductive polymer and hence good electrical contact.

The process of the present invention uses only one extruder. The extruder is conventional and the rapid mixing enables peroxide/silane/catalyst system to be thoroughly incorporated within seconds into a melt at a temperature at which the reaction will occur very quickly, e.g. 60 seconds total time.

The term "Rapra Cavity Transfer Mixer" or "Rapra CTM" as used herein refers to a mixing device developed by Rapra Technology Limited and comprising a cylindrical rotor rotatably mounted within a hollow cylindrical stator, the cylindrical surfaces of the rotor and stator being formed with pluralities of rows of concave cavities (preferably hemispherical) extending peripherally around the stator and rotor, said rows being spaced apart axially so that the rows on the stator are axially offset from the rows on the rotor and there is an axial overlap of the cavities in adjacent rows on the stator and rotor, the cavities in adjacent rows on the stator being circumferentially offset and the cavities in adjacent rows on the rotor being circumferentially offset.

Preferably, the cavity transfer mixer is mounted so that the hollow stator is in axial alignment with the discharge end of said barrel of the extruder to

receive therefrom compacted melted polymer blended with carbon black, and so that the rotor is in axial alignment with said screw of the extruder.

The output of the cavity transfer mixer is extruded prior to being exposed to $H_2O$, preferably in the form of steam.

The conductive black which is used in the present invention may be, for example, carbon black or graphite which is of course capable of producing a conductive polymer. "Structured" carbon blacks are preferred, as relatively small amounts are needed. The amount of conductive black present in the composition, based on ingredients used in the process, is preferably between 5 and 300 parts per 100 parts, by weight, of the polymer.

The polymer is preferably an olefine polymer. Examples include homo-, co- and ter- polymers of ethylene and propylene (particularly polyethylene, polypropylene and ethylene-propylene copolymer). Other examples include polyvinylidene halides and polyolefine oxides. Generally polymers that are suitable for use in the present invention include the polymers of alpha-olefines having 2 to 6 carbon atoms for example ethylene, propylene, 1-butene; 1-pentene; 1-hexene; isobutylene; 2-methyl-1-butene; 3-methyl-1-butene; 2,2-dimethylpropene; 2-methyl-1-pentene; 3-methyl-1-pentene; 4-methyl-1-pentene; 2,2-dimethyl-1-butene; 2,3-dimethyl-1-butene; 3,3-dimethyl-1-butene; and 2-ethyl-1-butene. The olefine polymer may be either a homopolymer of an alpha-olefine having 2 to 6 carbon

atoms or a copolymer of two alpha-olefines, e.g. copolymers of ethylene and propylene. Modified poly-alpha-olefines for example chlorinated polyethylene can be used. Any polymer that is capable of being extruded and is capable of being crosslinked by a hydrolyzable olefinically unsaturated silane is suitable for use in the present invention. In addition to polyethylene, any polymer or copolymer chemically suitable for silane crosslinking can be used, or blends of such polymers. Further examples are ethylene-vinyl acetate copolymers, polyamides and ethylene-propylene rubbers. Generally stiffness of the polymer increases with molecular weight and/or density. It is preferred to restore a certain amount of flexibility by addition of a flexibility enhancing agent, for example, ethylene vinyl acetate.

The conductive black, particularly a structured carbon black, can be incorporated into the polymer, particularly olefine polymer, by a number of methods. Firstly the black may be mixed directly with the polymer and the resulting black/polymer mixture may or may not be subsequently blended with a flexibility agent. Secondly the black may be mixed with a mixture of the polymer and the flexibility agent. Thirdly the black may be mixed with the flexibility agent and the resulting mixture subsequently blended with the polymer.

The conductive black, particularly a structured carbon black, increases the stiffness of the composition and therefore

the use of a flexibility agent (sometimes referred to as a flexibilising polymer) may be necessary for the use of the present invention for certain products, for example cables. Since high density polyethylene and even medium density polyethylene have a substantial degree of stiffness, even before incorporation of carbon black, the use of a flexibility agent is desirable. The first and third methods of incorporating the black into the polymer make more effective use of mixing plant than the second method. It is particularly preferred to use the third method since the flexibility agent has a lower melt viscosity than the polymer and the third method is advantageous in reducing carbon black structure breakdown, reducing power consumption by the mixer and having a lower disparity of viscosities for subsequent blending with the polymer.

The incorporation of the black into polymer is normally carried out batchwise in an internal mixer. The subsequent blending can be carried out continuously in an extruder, for re-extrusion or moulding or for direct extrusion/extrusion moulding into a product.

The free radical generator employed may be any compound which is capable of producing free radical sites in the polymer, the reaction conditions depending on temperature and retention time in the rapid mixer for achieving a suitable half life time. Preferred free-radical generators are organic peroxides and

peresters for example tert.-butylperoxyneodecanoate, tert.-butylperoxyneohexanoate, tert.-amylperoxypivalate, tert.-butylperoxypivalate, bis (3,5,5-trimethylhexanoyl) peroxide, bis (2-methylbenzoyl) peroxide, di-decanoyl-peroxide, di-octanoylperoxide, di-lauroylperoxide, tert.-butylperoxy-2-ethylhexanoate, tert.-butylperoxy diethylacetate, tert.-butylperoxybutyrate, 1,1-di.tert. -butylperoxy-3,5,5-trimethylcyclohexane, 1,1-di.tert. -butylperoxy cyclohexane, tert. butylperoxy-3,5,5-trimethylhexanoate, tert. butylperoxy isopropylcarbonate, 2,2-di-tert.-butylperoxy butane, tert.-butylperoxy stearylcarbonate, tert.-butylperoxy acetate, tert.-butylperoxy benzoate, 4,4-di-tert. butylperoxy-n-butylvalerate, dicumylperoxide, bis (tert. butylperoxyisopropyl) benzene, di-tert. butylperoxide, 2,2-azo bis (2,4-dimethylvaleronitrile), azo-bisisobutyronitrile, di-benzoylperoxide, 2,5-dimethyl-2,5-bis (tert.-butylperoxy) hexane, tert. butyl peroctoate, tert. butyl perbenzoate and tert. butylcumylperoxide as well as combinations thereof.

The hydrolyzable olefinically unsaturated silane employed preferably contains two or three hydrolyzable organic groups and a vinyl or allyl group as the group reacting with the free radical sites formed in the polymer by the free radical generator. Generally the hydrolyzable olefinically unsaturated silanes include organofunctional silanes of the general formula:

$$R(CH_2CH_2CH_2)_mSi(R_1)_{3-n}X_n$$

wherein R represents a monovalent olefinically unsaturated hydrocarbon or olefinically unsaturated hydrocarbonoxy group which is reactive with the free radical sites generated in the polymer by the free radical generator, X represents an hydrolysable organic group, preferably an alkoxy group having 1 to 12 carbon atoms (e.g. methoxy, ethoxy, butoxy), an aralkoxy group (e.g. phenoxy), an aliphatic acyloxy group having 1 to 12 carbon atoms (e.g. formyloxy, acetoxy, propionoxy), an oxymo or substituted amino group (e.g. alkylamino, arylamino), $R_1$ represents a monovalent alkyl, aryl or aralkyl group (e.g. ethyl, methyl, propyl, phenyl, benzyl), m is 0 or 1 and n is 1, 2 or 3.

Some representative examples of the unsaturated silanes are vinylmethyldimethoxysilane, vinyltriethoxysilane, vinyltrimethoxysilane, allyltriethoxysilane, allylmethyldiethoxysilane, allyltriethoxysilane, diallyldimethoxysilane, allylphenyldiethoxysilane, methoxyvinyldiphenylsilane, dodecenylvinyldipropoxysilane, didecenyldimethoxysilane, didodecenyldimethoxysilane, cyclohexenyltrimethoxysilane, hexenylhexoxydimethoxysilane, vinyl-tri-n-butoxysilane, hexenyltri-n-butoxysilane, allyldipentoxysilane, butenyldodecoxysilane, decenyldidecoxysilane, dodecenyltrioctoxysilane, heptenyltriheptoxysilane, allyltripropoxysilane, divinyldiethoxysilane, diallyldi-n-butoxysilane,

pentenyltripropoxysilane, allyldi-n-butoxysilane, vinylethoxysilane, sec.-butenyltriethoxysilane, 5-benzyl-6-(dinonoxysilyl)-1-hexene, 4-phenyl-tri-(5-propoxy-silyl)-1-pentene, 2-cyclopentyl-3-silyl-1-propene, o-(trimethoxysilyl) styrene, o-diphenoxy-silyl)-p-octylstyrene, o-(benzyloxydichlorosilyl)-o'-methylstyrene, 3-(tripropoxysilyl)-5-methyl-vinylcyclohexane, 5-cyclohexyl-6-(triethoxysilyl-1-hexene, and (methylcyclopentenyl) dibutoxysilane.

The silanol condensation catalyst may be, for example, a metal carboxylate, an organometal compound, an organic base or an acid. Examples of metal carboxylates are dibutyltin dilaurate, dioctyltin dilaurate, stannous acetate octoate, dibutyltin dioctoate, di-octyl tin-bis (isooctylmaleate) and di-octyl-tin-bis (isooctylthioglycolate). Organometal compounds which may be used include titanium esters and chelates, for example, tetrabutyl titanate, tetranonyl titanate, and bis (acetylacetonyl) di-isopropyl titanate. Organic bases which may be used include ethylamine, hexylamine, dibutylamine and piperidine. The acids which may be used include fatty acids and mineral acids. A particular useful catalyst is dibutyltin dilaurate. Preferably the catalyst is incorporated with the grafting ingredients.

The proportion of hydrolyzable olefinically unsaturated silane based on the weight of polymer is

not narrowly critical and can range from 0.1 to 10 wt. %, preferably 0.7 to 3 wt. %, of silane based on the total weight of polymer. The amounts of free-radical generator also is not narrowly critical and can be varied over wide ranges, for example, from 0.01 wt. % to 0.3 wt. %, preferably 0.05 to 0.2 wt. %, based on the total weight of polymer. Furthermore, the proportion of silanol condensation catalyst is not narrowly critical, illustratively ranging from 0.01 to 0.1 wt. %, preferably 0.02 to 0.08 wt. %, based on the total weight of polymer.

By way of example only, there is now described a number of laboratory experiments based on the process of the present invention. The parts, including parts per hundred (pphr) are by weight.

FORMULATIONS

The formulations used are set out in Table 1. In order that the components of the blend might be presented to the CTM at approximately equal viscosities, the carbon black was first mixed into the ethylene vinyl acetate (rather than the polyethylene), using a laboratory type B Banbury mixer of 1 litre internal capacity. This masterbatch, prepared from Elvax 260 (an ethylene vinyl acetate supplied by Du Pont Ltd.) and Vulcan P (a carbon black supplied by Cabot Carbon Ltd.), was formulated to have a carbon black content of 50% (100 pphr) and when let down

with an equal weight of Vestolen 4516 (a medium density polyethylene supplied by Huls (U.K.) Ltd.) gave an extrudate with a carbon black content of 25% (Mix C with a black content of 33.3 pphr).

The formulations are more easily compared by using 100 parts of polymer as a basis and the compounds listed in Table 1 contain between 25 and 37.5 pphr of Vulcan P. They were prepared from granulated masterbatches weighed out according to the ratios shown in Table 2. As an aid to heat stability 0.1 pphr of Irganox 1010 (pentaerythrityl-tetrakis [3-(3,5 di-tert. butyl-4-hydroxyphenyl) propionate supplied by Ciba Geigy Ltd.) was included as an antioxidant in all the mixes.

Table 1 . Composition of the four blends.

| | A | B | C | D |
|---|---|---|---|---|
| Vestolen 4516 | 66.7 | 66.7 | 66.7 | 66.7 |
| Elvax 260 | 33.3 | 33.3 | 33.3 | 33.3 |
| Vulcan P | 25 | 29.9 | 33.3 | 37.5 |
| Irganox 1000 | 0.1 | 0.1 | 0.1 | 0.1 |

Table 2 Constituents of the four blends

| | A | B | C | D |
|---|---|---|---|---|
| Vestolen | 66.7 | 66.7 | 66.7 | 54.1 |
| MB 50/50 Elvax 260/Vulcan P | 50 | 59.8 | 66.7 | 66.6 |
| MB 75/25 Vestolen A4516/Vulcan P | - | - | - | 16.8 |
| Elvax 260 | 8.3 | 3.4 | - | - |
| Irganox 1010 | 0.1 | 0.1 | 0.1 | 0.1 |

EXTRUSION

The silane/peroxide/tin catalyst additive was injected by triple headed metering pump (to minimise pulsations) through a non-return injector into the adaptor region between the extruder screw and rotor of a CTM. The metering pump was set to give the

required addition level of 2% grafting mixture (based on total polymer weight).

The extruder was fitted with a strip die giving an extruded strip measuring approximately 94 mm x 3 mm which was air cooled.

Crosslinking was carried out by steam autoclaving for 4 hours at 110°C.

To check that the samples were crosslinked, tensile pieces were cut from moulded sheets and tested to IEC 501, which specifies a maximum allowable extension under a load of 20 $N/cm^2$ for 15 minutes at 200°C.

RESISTANCE MEASUREMENT.

Small test pieces measuring 50 mm x 10 mm were cut from each of the extruded strips. In each case the thickness was measured. Conducting silver paint was applied to the ends of each strip prior to the application of 5 mm wide aluminium foil electrodes. Electrical resistance was measured using a Keithley microvolt digital multimeter type 177, reading on its highest range to 20 mΩ.

A row of test pieces mounted with crocodile clips on a PTFE board was placed in a fan oven with good temperature control. PTFE insulated copper wires attached to the crocodile clips were brought out through a suitable port and connected in turn to the

digital multimeter. Temperature was varied over the range 35°C to 140°C, at which temperature the uncrosslinked materials collapsed and lost their shape.

Figures 1 to 5 show PTC curves of Resistance (in Ohms) V Temperature (°C). "A", "B", "C" and "D" relate to the blends designated in Tables 1 and 2. The suffix "O" relates to uncrosslinked materials and "X" to crosslinked materials.

All the materials showed a positive temperature coefficient of resistance between 35°C and 85°C. However, the uncrosslinked materials (examples shown in Figure 1) all showed negative coefficients (NTC effect) at higher temperatures, the exact temperature of turnover depending on the initial room temperature resistance. The greater the initial resistance, the lower the temperature at which turnover occurred. At 140°C the crosslinked materials still showed a PTC effect (examples shown in Figure 2), thus demonstrating the efficacy of the silane crosslinking in raising the working temperature range.

To enable the crosslinked compounds to be taken to a higher temperature still, the uncrosslinked samples were removed from the oven and the heating experiment repeated from room temperature to 180°C. The NTC effect associated with the uncrosslinked materials was absent and the resistance reached a nominally steady value at about 130 to 140°C (Figure 3).

A known difficulty with polymer PTC materials is that there is a steady drift in resistance if the material is kept at a high temperature for a long time. It would be anticipated that silane

crosslinking would minimise this effect and to check this a long term stability test was conducted.

Most of the resistance change took place within the first day (Figure 4). For all compounds there was a rise in room temperature resistance of about 30%. Following this the resistance remained relatively steady, to within some 10%, for the next 35 days.

Similarly, over the first day there was a drop in the 120°C resistance of about 60% (Figure 5 ) followed by smaller variations resulting in an overall rise over the next 35 days to a value within 40% of the initial. Oscillations in the high temperature figures are not unexpected since in this region the PTC curve is steep and changes in resistance will occur as the temperature controller oscillates between its high and low limits (nominally ± 1°C).

Thus, in commercial practice it may be necessary to subject a product to an initial intensive annealing process equivalent to approximately 24 hours at 120°C in order to stabilise both the room temperature resistance and the slope of the PTC curve (equivalent to the 120° resistance values), but this accords with known technology (prior art).

CLAIMS

1. A polymeric composition which comprises one or more polymers crosslinked by the use of sufficient hydrolyzable olefinically unsaturated silane to render said composition dimensionally and electrically heat stable, said composition containing a sufficient proportion of a conductive black to impart to it electrically conductive properties.

2. A polymeric composition as claimed in claim 1 in which the conductive black is carbon black.

3. A polymeric composition as claimed in claim 1 or 2 in which there is between 5 and 300 parts by weight of conductive black and between 0.1 and 10 parts by weight of the hydrolyzable olefically unsaturated silane, per 100 parts by weight of polymer.

4. A polymeric composition as claimed in any of claims 1 to 3 in which the polymer is an olefine polymer.

5. A polymeric composition as claimed in any of claims 1 to 4 in which a flexibility agent is also present.

6. A process for producing an electrically conductive polymeric material which comprises;

(a) forming a mixture of conductive black with a thermoplastic polymer or polymer blend where one or more polymers is capable of being cross-linked by a hydrolyzable olefinically unsaturated silane;

(b) feeding this mixture, or a mixture of

preblended materials, into the feed zone of an extruder or other machine having a forwarding screw and a barrel in which the screw is positioned and rotated to advance the mixture through the barrel;

(c) compacting and melting the polymers in the barrel to form a melt;

(d) injecting grafting ingredients, comprising a hydrolyzable olefinically unsaturated silane and a free-radical generator, into the melt

(e) subjecting the melt and grafting ingredients to a very rapid distributive mixing action, grafting the hydrolyzable silane to the polymer and shaping by means of a die; and

(f) subjecting the product of step (e) to the action of $H_2O$ in the presence of a silanol condensation catalyst until the polymer is crosslinked.

7. A process as claimed in claim 6 in which the grafting ingredients are introduced immediately prior to the rapid distributive action.

8. A process for producing an electrically conductive polymeric material which comprises:

(a) forming a mixture of conductive black with a thermoplastic polymer or polymer blend where one or more polymers is capable of being cross-linked by a hydrolyzable olefinically unsaturated silane;

(b) feeding this mixture, or a mixture of preblended materials, into the feed zone of an

extruder or other machine having a forwarding screw and a barrel in which the screw is positioned and rotated to advance to the mixture through the barrel;

(c) compacting and melting the polymers in the barrel to form a melt;

(d) injecting grafting ingredients, comprising a hydrolyzable olefinically unsaturated silane and a free-radical generator, into the melt,

(e) subjecting the melt and grafting ingredients to a very rapid distributive mixing action in a cavity transfer mixer, grafting the hydrolyzable silane to the polymer and shaping by means of a die; and

(f) subjecting the product of step (e) to the action of $H_2O$ in the presence of a silanol condensation catalyst until the polymer is crosslinked, the cavity transfer mixer comprising a cylindrical rotor rotatably mounted within a hollow cylindircal stator, the cylindrical surfaces of the rotor and stator being formed with pluralities of rows of concave cavities extending peripherally around the stator and rotor, the rows being spaced apart axially so that the rows on the stator are axially offset from the rows on the rotor and there is an axial overlap of the cavities in adjacent rows on the stator and rotor, the cavities in adjacent rows on the stator being circumferentially offset and the cavities in adjacent rows on the rotor being circumferentially

offset.

9. A process as claimed in claim 8 in which the concave cavities are hemispherical.

10. A process as claimed in claim 8 or 9 in which the cavity transfer mixer is mounted so that the hollow stator is in axial alignment with the discharge end of the barrel of the extruder to receive therefrom compacted melted polymer blended with conductive black, and so that the rotor is in axial alignment with the screw of the extruder.

11. A process as claimed in any of claims 8 to 10 in which the grafting ingredients are introduced immediately prior to the cavity transfer mixer.

12. A process as claimed in any of claims 6 to 11 in which the conductive black is carbon black.

13. A process as claimed in any of claims 6 to 12 in which there is between 5 and 300 parts by weight of conductive black and between 0.1 and 10 parts by weight of the hydrolyzable olefinically unsaturated silane, per 100 parts by weight of polymer.

14. A process as claimed in any of claims 6 to 13 in which the polymer is an olefine polymer.

15. A process as claimed in any of claims 6 to 14 in which a flexibility agent is also present.

16. A resistor having a PTC characteristic characterized in that there is present a polymeric composition as claimed in any of claims 1 to 5.

..................................................

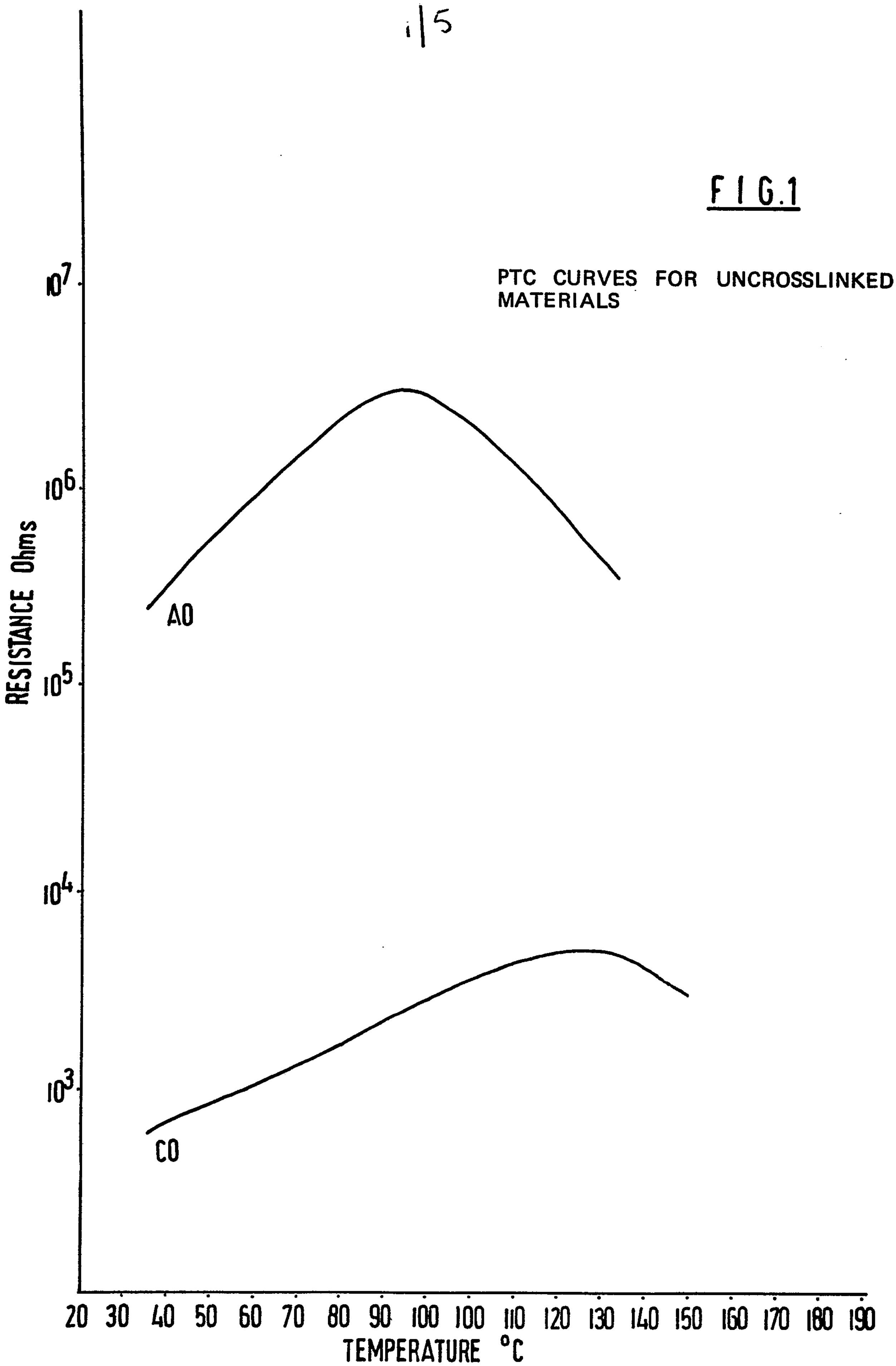


FIG.1

PTC CURVES FOR UNCROSSLINKED MATERIALS

F I G.2

PTC CURVES FOR
CROSSLINKED MATERIALS

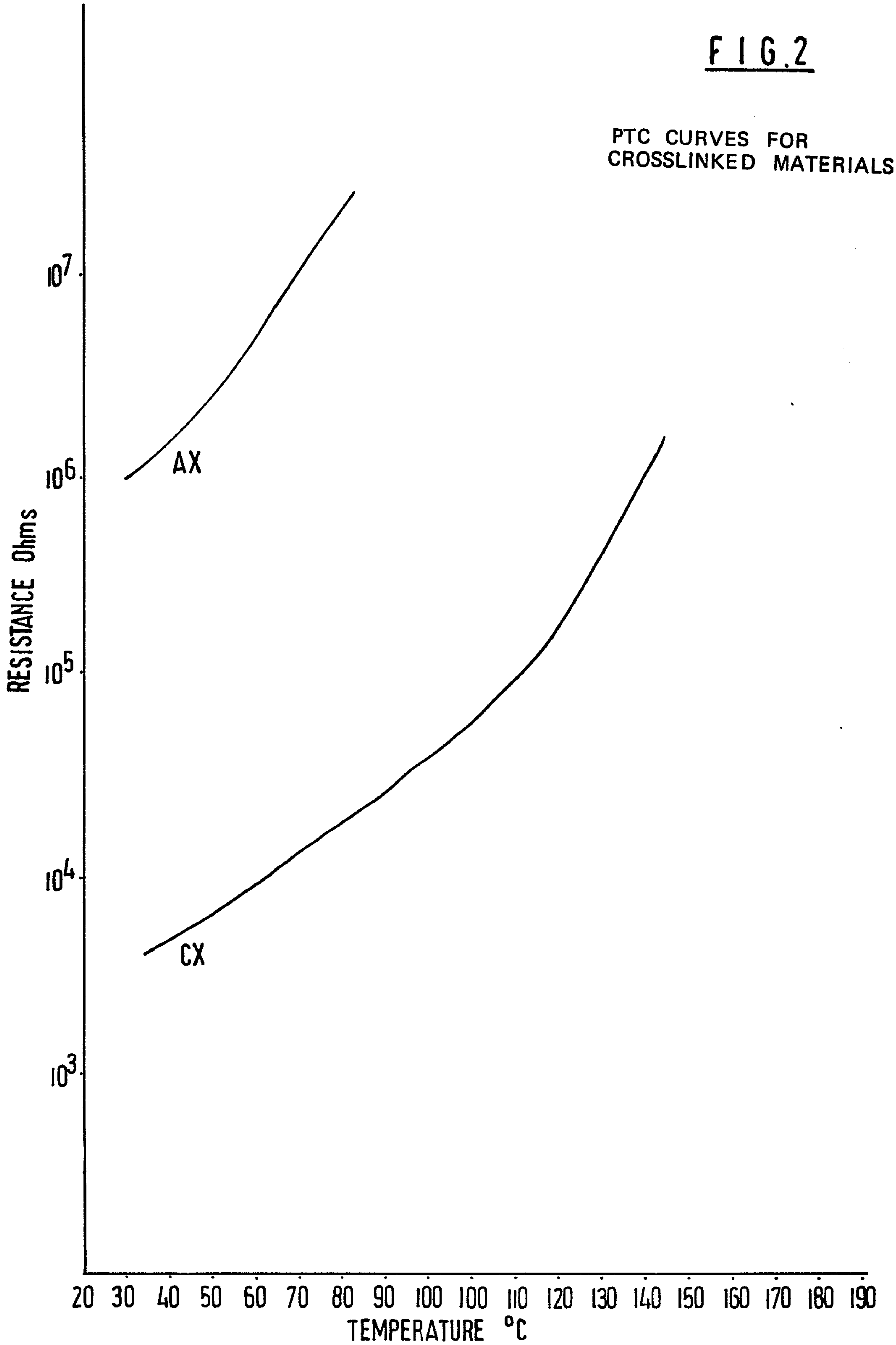

0235439

3/5

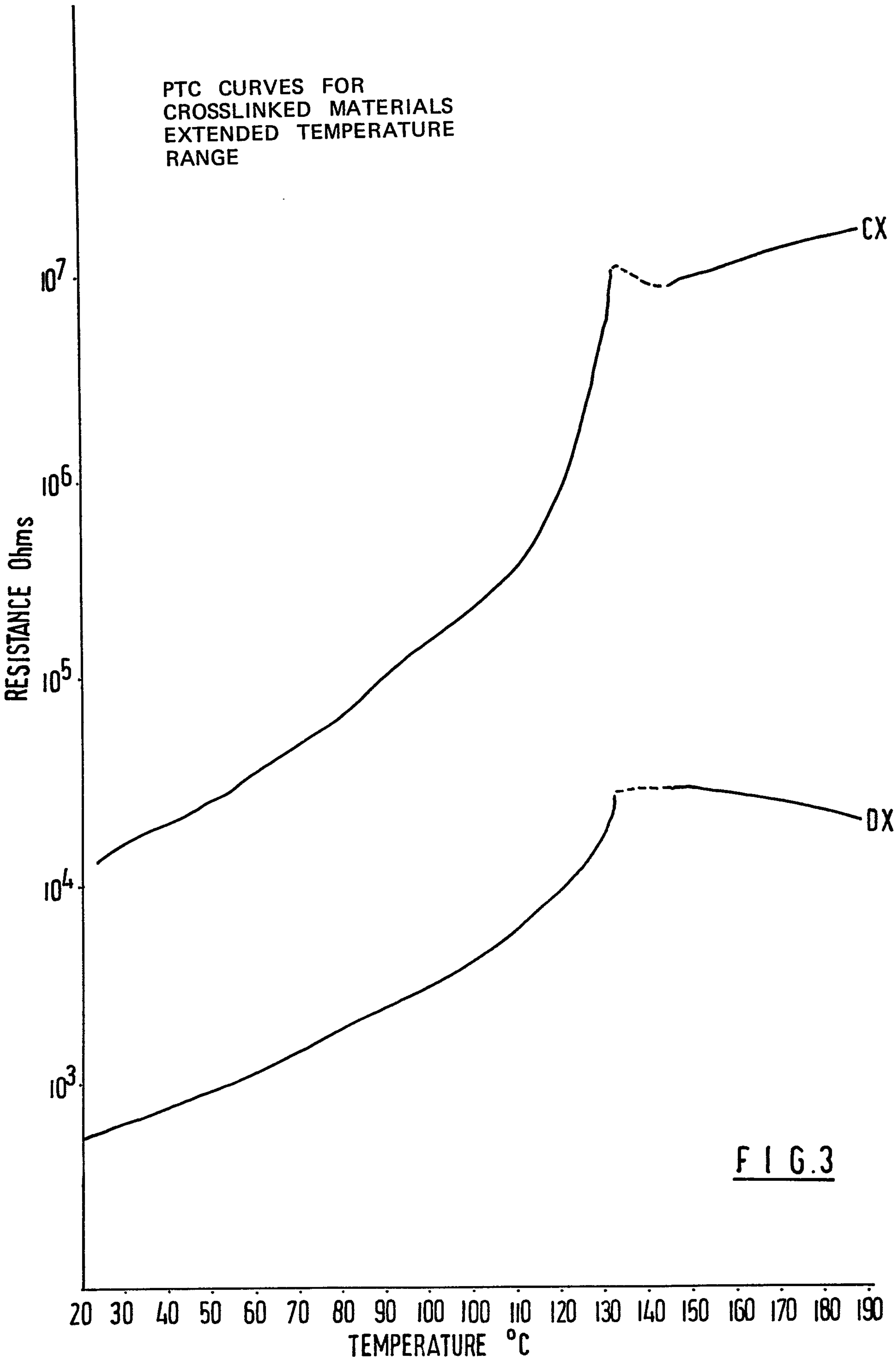


F I G.3

4/5

0235439

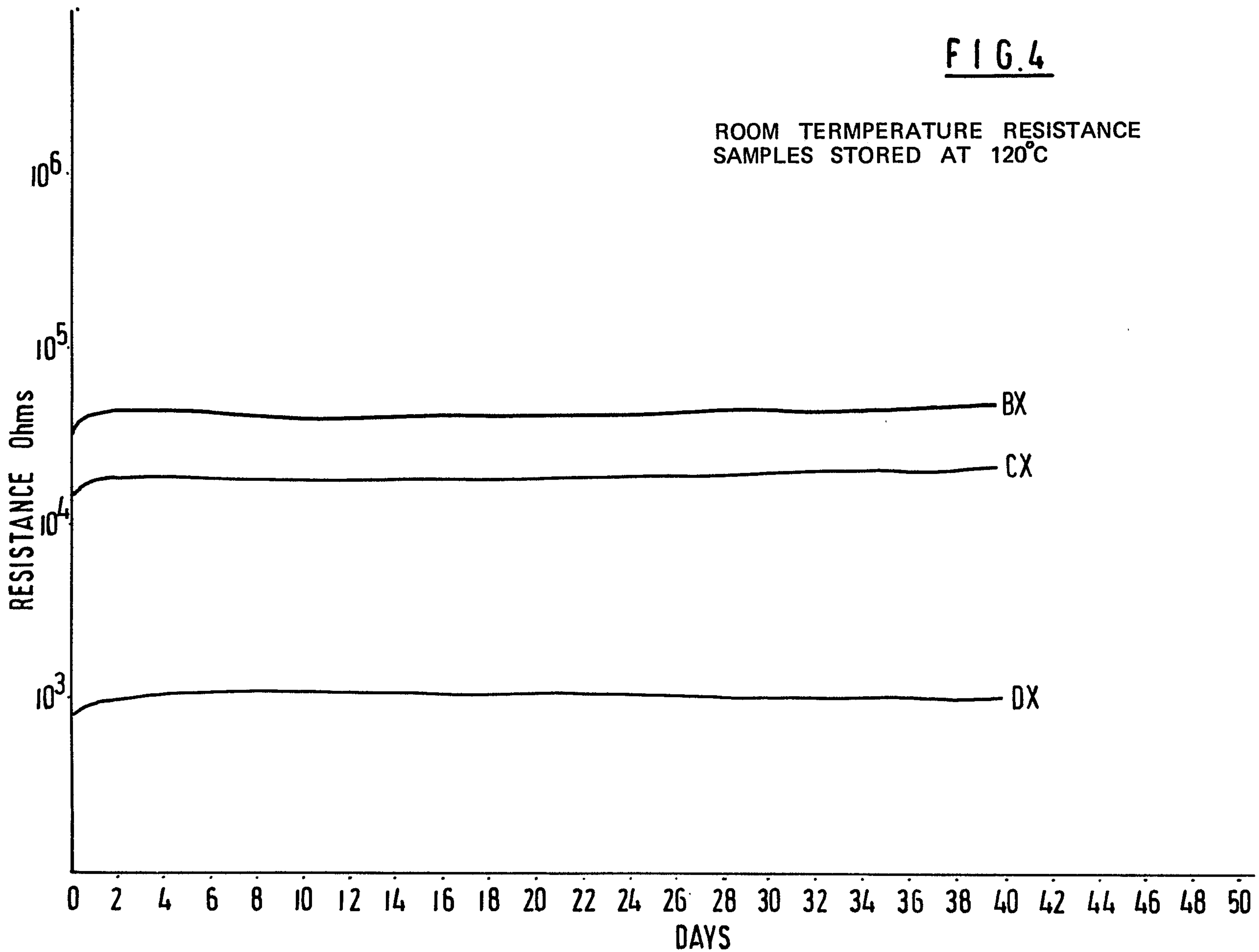


FIG.4

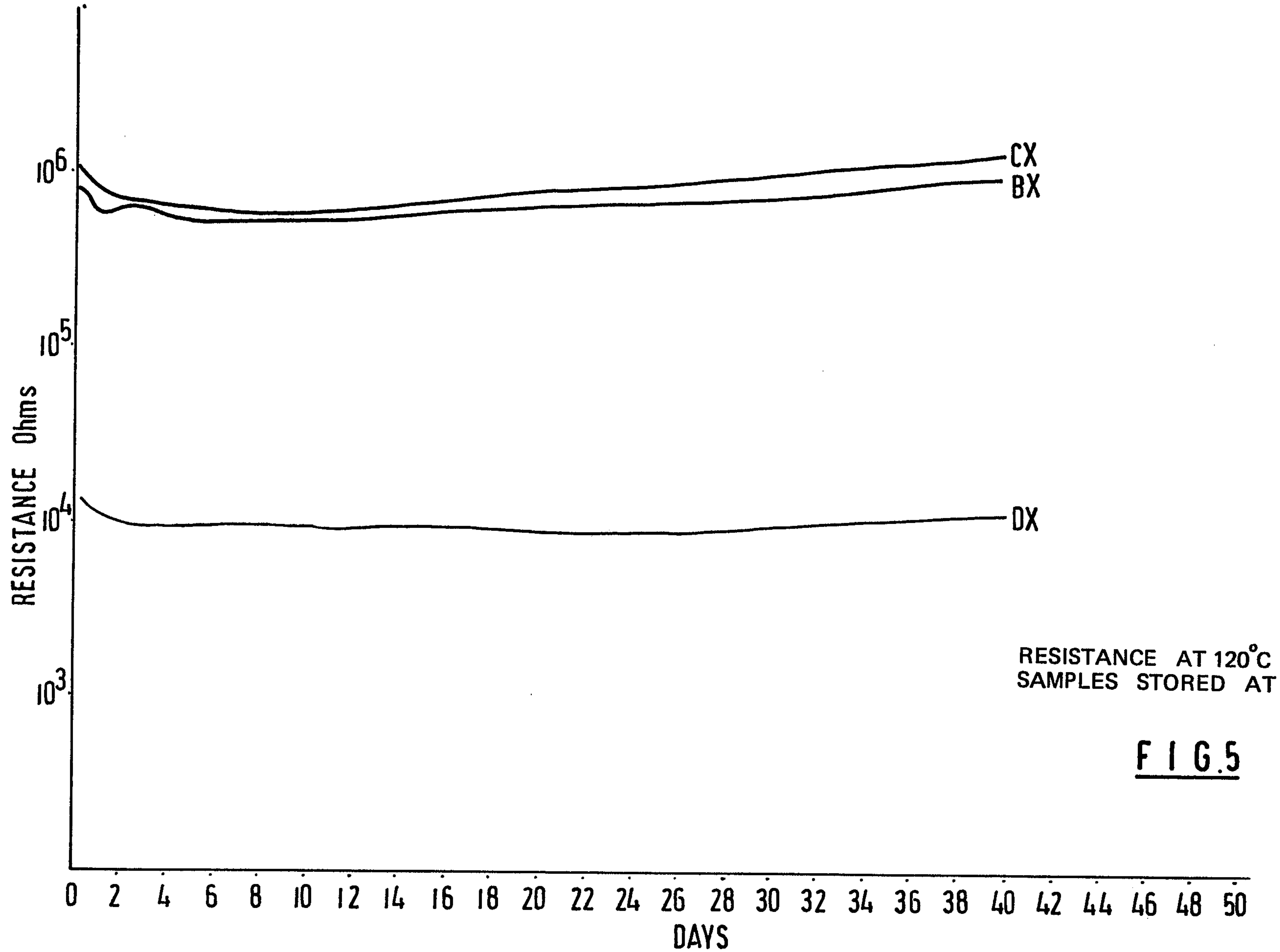


RESISTANCE AT 120°C
SAMPLES STORED AT 120°C

FIG.5

European Patent Office

0235439

Application number

# EUROPEAN SEARCH REPORT

EP 86307859.8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE - A1 - 2 527 850 (GUTE-HOFFNUNGSHUTTE)<br>* Page 2, line 1 - page 5, line 8 *<br>-- | 1-4 | H 01 B 1/24<br>H 01 C 7/02<br>B 29 B 7/42 |
| X | EP - A1 - 0 010 148 (GUTE-HOFFNUNGSHUTTE)<br>* Page 5, line 31 - page 8, line 25 * | 1-4,6,7,12-14 | |
| Y | * Page 5, line 31 - page 8, line 25 *<br>-- | 5,15,8-11 | |
| Y | EP - A1 - 0 129 617 (MITSUI)<br>* Abstract; page 7, lines 18-21 *<br>-- | 5,15 | |
| | | | TECHNICAL FIELDS SEARCHED (Int. Cl.4) |
| Y | US - A - 4 419 014 (GALE)<br>* Column 2, line 39 - column 3, line 52; fig. 1 *<br>-- | 8-11 | H 01 B<br>H 01 C 7/00<br>B 29 B 1/00 |
| X | JP - A2 - 59-60 904 (SHOWA)<br>* Claims; examples *<br>& Chemical Abstracts; Columbus, Ohio, USA, vol. 101, no. 14, 01-10-1984, page 665<br>* Abstract No. 101:121595 k *<br>-- | 1-4,16 | |

The present search report has been drawn up for all claims

| Place of search | Date of completion of the search | Examiner |
|---|---|---|
| VIENNA | 08-01-1987 | KUTZELNIGG |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

0235439

Application number

European Patent Office

# EUROPEAN SEARCH REPORT

| DOCUMENTS CONSIDERED TO BE RELEVANT | | | EP 86307859.8 |
|---|---|---|---|
| Category | Citation of document with indication, where appropriate, of relevant passages | Relevant to claim | CLASSIFICATION OF THE APPLICATION (Int. Cl.4) |
| X | US - A - 4 117 195 ((SWARBRICK et al.)<br>* Column 1, line 31 - column 3, line 67 *<br>---- | 1,2,4, 6,7 | |
| | | | TECHNICAL FIELDS SEARCHED (Int. Cl.4) |

The present search report has been drawn up for all claims

| Place of search | Date of completion of the search | Examiner |
|---|---|---|
| VIENNA | 08-01-1987 | KUTZELNIGG |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82